# EUROPEAN PATENT APPLICATION

(11) **EP 1 878 658 A2**
(43) Date of publication of application: **16.01.2008**
(21) Application number: 07252538.9
(22) Date of filing: 22.06.2007
(51) Int. Cl.: B64C 13/00, B64C 13/42, F16H 25/20

(54) **Aircraft stabilizer actuator**

(30) Priority: 22.06.2006 US 805532 P
(71) Applicant: PARKER-HANNIFIN CORPORATION, Cleveland, Ohio 44124-4141 (US)
(72) Inventor: Cyrot, Luc P, Mission Viejo, CA92692 (US); Polcuch, Eric A., Mission Viejo, CA 92692 (US)
(74) Representative: Albutt, Anthony John

(57) **Abstract**

An actuator (30) for actuating translation movement of a component (32) (e.g., a horizontal stabilizer) relative to a structure (34) (e.g., an aircraft's rear fuselage). The actuator (30) comprises a control-motion-providing assembly (40) having a drive path from a motion provider (52) to the component (32), a motion-permit-prevent assembly (42), and a sensing system (94) which senses a failure in the drive path. The motion-permit-prevent assembly (42) comprises a screw member (74), which is not part of the drive path, and a nut member (76). Upon detection drive-path failure by the sensing system (94), the motion-permit-prevent assembly (42) converts from a motion-permitting mode (whereat relative rotation between the screw-nut members (74/76) is permitted) to a motion-preventing mode (whereat relative rotation of the screw-nut members (74/76) is prevented). In the motion-preventing mode, the component (32) is locked or immobilized.

## Description

### General Field

An actuator for selectively pivoting the horizontal stabilizer of an aircraft during flight.

### Background

An aircraft can comprise a rear fuselage having a vertical tail fin which carries the rudder and horizontal stabilizers with elevators on either side thereof. Each horizontal stabilizer is pivotally mounted to the fuselage whereby it can be pivoted to adjust the longitudinal pitch of *(i.e.,* "trim") the aircraft. During flight, the horizontal stabilizer is adjusted by an actuator which moves its leading edge upward/downward relative to the pivotal axis. An aircraft stabilizer actuator can comprise an assembly which provides control motion to the stabilizer through a drive path. Upon failure or malfunction of the drive path, it is usually desirable to immobilize the stabilizer in a fixed position so that it does not erratically oscillate at the mercy of aerodynamic forces. A pilot can control other equipment (e.g., the elevator) to compensate for an immobilized stabilizer until the aircraft has landed and the actuator can be repaired.

### Summary

Aspects of the invention are defined in the accompanying claims.

An actuator for actuating translation movement of a component relative to a structure. The actuator comprises a control-motion-providing assembly comprising a drive path from a motion provider to the component, a motion-permit-prevent assembly, and a sensing system that senses a failure in the drive path. The motion-permit-prevent assembly comprises a screw member (that is not part of the drive path) and a nut member. The motion-permit-prevent assembly is convertible between a motion-permitting mode, wherein relative rotation between the screw member and the nut member is permitted and translation movement of the component causes such relative rotation, and a motion-preventing mode, wherein relative rotation between the screw member and the nut member is prevented and translation movement of the component is prevented. When the sensing system senses a drive-path failure, it conveys this detection to the motion-permit-prevent assembly for conversion to its motion-preventing mode.

Thus, the actuator can comprise a first assembly which only provides control of the horizontal stabilizer and a second assembly which only provides a braking (or locking) mechanism for the horizontal stabilizer in the event of drive-path failure. The second assembly does not require component destruction to perform its braking function whereby inspection/ testing of drive-path-failure features can be done without an undue maintenance burden. The two assemblies do not both contribute a drive path whereby a mechanical disconnect in the first assembly is detectable in flight, and load-sharing backlash is not an issue. The drive-path-failure sensing system can be continuous (as may be required by certification authorities) and comprise position sensors which sense the position of movable members and/or the relative positioning therebetween.

### Drawings

Figure 1 is a simplified perspective view of the rear fuselage of an aircraft and the horizontal stabilizers pivotally mounted thereon.
Figure 2 is a schematic drawing depicting an actuator for a horizontal stabilizer.

### Description

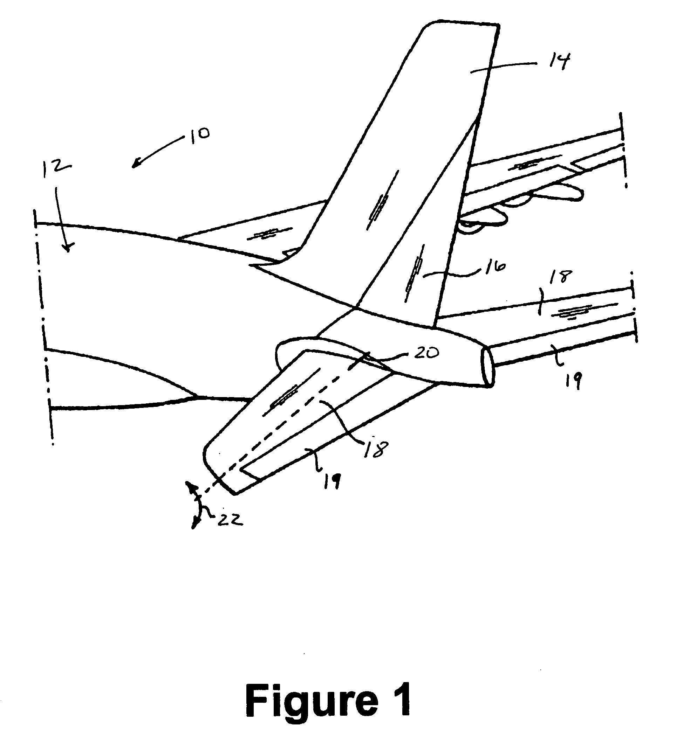

Referring first to Figure 1, an aircraft 10 can comprise a rear fuselage 12 having a tail fin 14 which carries the rudder 16 and horizontal stabilizers 18 and elevators 19 on either side thereof. Each horizontal stabilizer 18 is pivotally mounted to the fuselage at pivot point 20 whereby it can be pivoted about axis 22 to adjust the longitudinal pitch of *(i.e.,* "trim") the aircraft 10. During flight, the horizontal stabilizer is adjusted by an actuator which moves its leading edge upward/downward relative to the axis 22. The stabilizer adjustments may be automatically controlled directly from the aircraft's flight computers and/or may be manually controlled by pilot input.

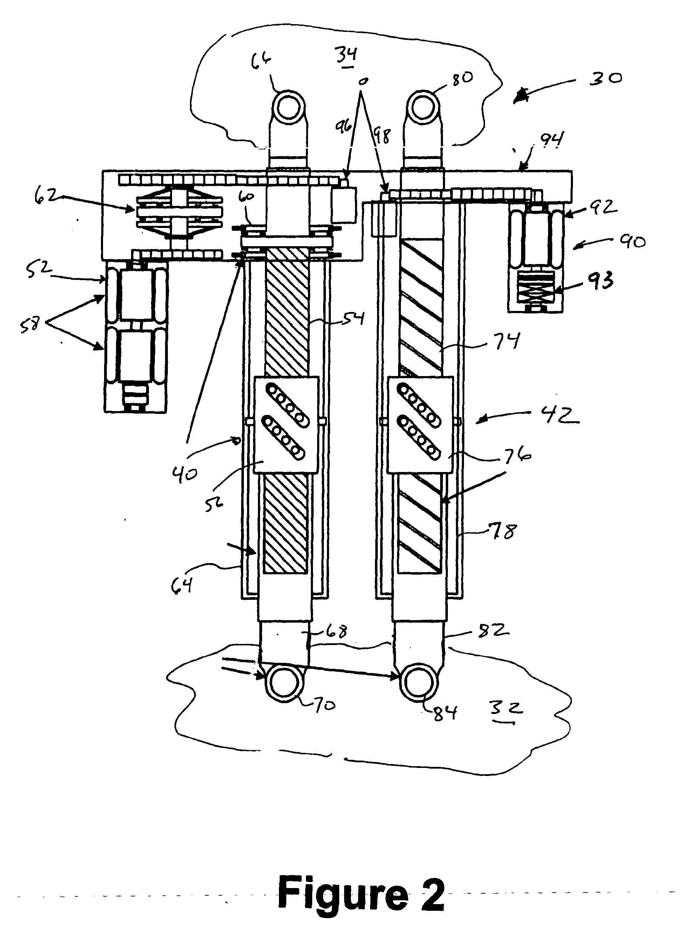

Referring now to Figure 2, an actuator 30 is shown for actuating movement of a component 32 (e.g., a horizontal stabilizer 18) relative to a structure 34 (e.g., an aircraft's rear fuselage 12). The actuator 30 comprises an assembly 40, which provides control motion to the component 32 and an assembly 42 which either permits or prevents movement of the component 32.

During normal operation, the assembly 42 will permit movement of the component 32 whereby its movement will be controlled by the drive path control-motion-providing assembly 40. Upon failure or malfunction of the drive path, the assembly 42 will prevent movement of the component 32. In this manner, the component 32 will be immobilized in a fixed position rather than erratically and/or unpredictably oscillating at the mercy of external forces (e.g., aerodynamic forces). In an aircraft application, for example, the pilot will be able to compensate for the immobilized component 32 with the elevators 19.

The control-motion-providing assembly 40 comprises a motion provider 52, a screw member 54 and a nut member 56. The motion provider 52 can be, for example, an electric motor 58 (or dual coaxial motors 58, as shown) and associated gearing 60. A slip clutch 62 or other uncoupling means can be provided to prevent overloads. The screw member 54 is rotated by the motion provider 52 and rotation of the screw member 54 results in linear movement of the nut member 56. Alternatively, (with appropriate modifications), the nut member 56 can be rotated and the screw member 54 moved linearly in response thereto. In either or any event, the members 54/56 can incorporate balls or rollers therebetween (*i*.*e*., the screw member 54 can be a ball screw or a roller screw).

In the illustrated embodiment, the assembly 40 comprises a housing 64 in which the screw member 54 rotates and in which the nut member 56 slides up/down in response to this rotation. The motion provider 52 and the housing 64 are pivotally connected to a self-aligning member 66 which is pivotally connected to the structure 34. In this manner, the screw member 54 is fixed from axial or translation movement relative to the structure 34. The nut member 56 is pivotally connected, via a link 68 , to a self-aligning member 70 which is pivotally connected to the component 32.

The motion-control-providing assembly 40 thus comprises a drive path from the motion provider 52 to the component 32. With particular reference to the horizontal stabilizer 18 (Figure 1), the motor's rotation of the screw member 54 in one direction will pivot its leading edge upward, and the motor's rotation of the screw member 54 in the opposite direction will pivots its leading edge downward. Also with particular reference to a horizontal stabilizer, the assembly 40 and/or the motion provider 52 can incorporate "no back" features to eliminate back-driving by aerodynamic forces.

The motion provider 52 need not be an electric motor and/or the assembly 40 need not include rotational members such as screw member 54 and the nut member 56. The motion provider 52 could instead comprise hydraulic and/or pneumatic cylinders, solenoid plunger systems, or any other device which can transfer linear movement to the component 32. That being said, relatively rotational members, and especially those incorporating balls or rollers, often offer higher stiffness, lighter weight, lower cost, and/or greater packaging flexibility.

The motion-permit-prevent assembly 42 comprises a screw member 74 and a nut member 76 which can incorporate balls or rollers therebetween (*i*.*e*., the screw member 74 can be a ball screw or a roller screw). The screw member 74 is a completely separate structure than the drive screw member 54 and the nut member 76 is a completely separate structure than the drive nut member 56. The screw member 74 is not part of the drive path.

In the illustrated embodiment, the motion-permit-prevent assembly 42 comprises a housing 78 for the screw member 74 and the nut member 78. The housing 78 is pivotally connected to a self-aligning member 80 which is pivotally connected to the structure 34. The nut member 76 is pivotally connected, via a link 82, to a self-aligning member 84 which is pivotally connected to the component 32. The self-aligning members 80/84 are completely separate structures than the self-aligning members 66/70 of the motion-control-providing assembly 40.

During normal actuator operation, the assembly 40 will control movement of the component 32 through the drive path and the assembly 42 will be in its motion-permitting mode. When the component 32 moves in response to a control command, the assembly 42 moves in a corresponding and deferential manner. For example, the nut member 76 translates with the component 32 and the screw member 74 rotates within nut member 76 in response to this translation. Alternatively, the screw member 74 translates with the component 32 and the nut member 76 rotates around the screw member 74 in response to this translation. The members 74/76 can have a low-resistance and/or easy-drive design (e.g., high lead angle threads) so that a substantial increase in power/force is not necessary to accomplish deferential movement.

If the drive path fails during flight, the assembly 40 converts to its motion-preventing mode. In this mode, relative rotation between the screw member 74 and the nut member 76 is prevented whereby motion of the component 32 is prevented. To this end, the motion-permit-prevent assembly 42 can further comprise a braking device 90 which prevents rotation of the non-translating member 74/76. The device 90 can comprise a dynamic brake 92 (e.g., hydraulic) and/or a static brake 93.

The mode conversion of the motion-permit-prevent assembly 42 can be triggered by a sensing system 94 which detects a failure in the drive path. For example, the sensing system 94 can be connected to the braking device 90 to trigger it upon drive-path-failure detection. The braking device 90 can be electrically triggered, mechanically triggered, and/or triggered by centrifugal force. The sensing system 94 can further incorporate operation of the motion provider 52 and/or related components. For example, upon drive-path-failure detection, the motor 58 can be turned off and/or the clutch 62 can be disengaged.

The sensing system 94 can be continuous (as may be required by certification authorities) and can convey signals to the pilot and/or a flight log indicating the detection (or non-detection) of drive-path failure.

The sensing system 94 can comprise, for example, dual position sensors 96 and 98 which sense the position of a movable component of the assembly 40, the position of a movable component of the assembly 42, and/or the relative positioning therebetween. For example, the sensing system 94 can sense motor rotation and compare it with movement of a screw member or a nut member. The position sensing, and thus drive-path-failure detection, can be continuous and independent of load direction.

The actuator 30 can be constructed to allow periodic inspections or testing of its drive-path-failure features without an undue maintenance burden. For example, the sensing/detecting scheme of the sensing system 94 can be automatically tested by aircraft electronics. Brake operation can be verified by the input of a drive-path-failure signal to insure the braking device 90 will be triggered by such a signal. The assembly 42 does not require the breaking or destroying of certain components to convert from its motion-permit mode to its motion-prevent mode. Thus, drive-path-failure signal triggering and actual operation confirmation are possible when testing or inspecting the actuator's locking capability.

Although the stabilizer 18, the actuator 30, the component 32, the structure 34, the assembles 40/42, and the components thereof have been shown and described with respect to a certain embodiment or embodiments, it is obvious that equivalent alterations and modifications will occur to others skilled in the art upon the reading and understanding of this specification and the annexed drawings. In regard to the various functions performed by the above described elements (e.g., components, assemblies, systems, devices, compositions, etc.), the terms (including a reference to a "means") used to describe such elements are intended to correspond, unless otherwise indicated, to any element which performs the specified function of the described element (*i.e.,* that is functionally equivalent), even though not structurally equivalent to the disclosed structure which performs the function. In addition, while a particular feature of the invention may have been described above with respect to only one or more of several illustrated embodiments, such feature may be combined with one or more other features of the other embodiments, as may be desired and advantageous for any given or particular application.

Accordingly, there has been described an actuator (30) for actuating translation movement of a component (32) (e.g., a horizontal stabilizer) relative to a structure (34) (e.g., an aircraft's rear fuselage). The actuator (30) comprises a control-motion-providing assembly (40) having a drive path from a motion provider (52) to the component (32), a motion-permit-prevent assembly (42), and a sensing system (94) which senses a failure in the drive path. The motion-permit-prevent assembly (42) comprises a screw member (74), which is not part of the drive path, and a nut member (76). Upon detection drive-path failure by the sensing system (94), the motion-permit-prevent assembly (42) converts from a motion-permitting mode (whereat relative rotation between the screw-nut members (74/76) is permitted) to a motion-preventing mode (whereat relative rotation of the screw-nut members (74/76) is prevented). In the motion-preventing mode, the component (32) is locked or immobilized.

## Claims

1. An actuator (30) for actuating translation movement of a component (32) relative to a structure (34), said actuator (30) comprising:
a control-motion-providing assembly (40) comprising a drive path from a motion provider (52) to the component (32);
a motion-permit-prevent assembly (42) comprising a screw member (74) which is not part of the drive path and a nut member (76); wherein the motion-permit-prevent assembly (42) is convertible between:
a motion-permitting mode wherein relative rotation between the screw member (74) and the nut member (76) is permitted and translation movement of the component (32) causes such relative rotation; and
a motion-preventing mode wherein relative rotation between the screw member (74) and the nut member (76) is prevented and translation movement of the component (32) is prevented; and
a sensing system (94) which senses a failure in the drive path and conveys this detection to the motion-permit-prevent assembly (42) for conversion to its motion-preventing mode.

2. An actuator (30) as set forth in claim 1, wherein, when the motion-permit-prevent assembly (42) is in its motion-permitting mode, the nut member (76) translates with the component (32) and the screw member (74) rotates within the nut member (76) but does not translate with the component (32).

3. An actuator (30) as set forth in claim 1, wherein, when the motion-perrnit-prevenfassernbly (42) is in its motion-permitting mode, the screw member (74) translates with the component (32) and the nut member (74) rotates around the screw member (74) but does not translate with the component (32).

4. An actuator (30) as set forth in any of the preceding claims, wherein the sensing system (94) comprises a position sensor (96/98) which senses the position of a movable member of the control-motion-providing assembly (40), the position of a movable member of the motion-permit-prevent assembly (42), and/or the relative positioning therebetween.

5. An actuator (30) as set forth in any of the preceding claims, further comprising a braking device (90) which prevents relative rotation between the screw member (74) and the nut member (76) when the motion-permit-prevent assembly (42) is in its motion-prevent mode.

6. An actuator (30) as set forth in the preceding claim, wherein the braking device (90) is electrically triggered, mechanically triggered, and/or triggered by centrifugal force.

7. An actuator as set forth in either of the two preceding claims, wherein the braking device (90) comprises a dynamic brake (92) and/or a static brake (93).

8. An actuator as set forth in any of the three preceding claims, wherein the braking device (90) comprises a hydraulic brake (93).

9. An actuator (30) as set forth in any of the preceding claims, wherein the motion provider (52) comprises a motor (58), wherein the control-motion-providing assembly (40) further comprises a screw member (54) which is rotated by the motor (58) and a nut member (56) which linearly moves in response to rotation of the screw member (54), the nut member (56) being connected to the component (32).

10. An actuator (30) as set forth in any of the preceding claims, wherein the screw member (54) and/or the screw member (74) comprises a ball screw or a roller screw.

11. An aircraft (10) comprising the actuator (30) set forth in any of the preceding claims.

12. An aircraft (10) as set forth in claim 11, wherein the component (32) is a horizontal stabilizer (18) and the structure (34) is the rear fuselage (12).
